Europäisches Patentamt

European Patent Office

Office européen des brevets

(11) Veröffentlichungsnummer: **0 517 227 A1**

# EUROPÄISCHE PATENTANMELDUNG

(21) Anmeldenummer: **92109490.0**

(51) Int. Cl.5: **G11B 7/00, G11B 7/26**

(22) Anmeldetag: **04.06.92**

(30) Priorität: **05.06.91 DE 4118457**

(43) Veröffentlichungstag der Anmeldung:
**09.12.92 Patentblatt 92/50**

(84) Benannte Vertragsstaaten:
**AT CH DE FR GB IT LI NL SE**

(71) Anmelder: **Max-Planck-Gesellschaft zur Förderung der Wissenschaften e.V.
Bunsenstrasse 10
W-3400 Göttingen(DE)**

(72) Erfinder: **Stuke, Michael, Dipl.-Phys.
Auf der Lieth 36
W-3400 Göttingen(DE)**
Erfinder: **Langowski, Horst-Christian,**
**Dipl.-Chem.
Gipsenweg 12
W-8190 Wolfratshausen(DE)**
Erfinder: **Damm, Tobias, Dipl.-Phys.
Walter-Flex-Strasse 32
W-3090 Leverkusen(DE)**
Erfinder: **Preuss, Stefan, Dipl.-Chem.
Hölleweg 9
W-3400 Göttingen(DE)**

(74) Vertreter: **von Bezold, Dieter, Dr.
Dr. Dieter von Bezold Dipl.-Ing. Peter Schütz
Dipl.-Ing. Wolfgang Heusler Brienner Strasse
52
W-8000 München 2(DE)**

(54) **Verfahren zum Speichern von Information in einem optisch lesbaren Datenspeicher.**

(57) Verfahren zum Speichern von Information in einem optischen Datenspeicher, insbesondere CD (Compact Disc), durch ein zweistufiges Verfahren, bei dem in einem ersten Verfahrensschritt ein Substrat-Material in ausgewählten Bereichen durch eine Belichtung verhältnismäßig niedriger Fluenz unter Verwendung einer Maske, eines holographischen Abbildungsverfahrens oder im Direktschreib-Verfahren zur Definition einer Struktur vorbehandelt wird, so daß in einem zweiten Verfahrensschritt durch eine zweite, räumlich nicht-selektive Belichtung verhältnismäßig hoher Fluenz die im ersten Verfahrensschritt belichteten Bereiche der Oberfläche ablatiert werden können.

FIG. 2

Laserstrahl 20

L1  f=380 mm

v

Probe 16

Verschiebetisch 22

EP 0 517 227 A1

Die Erfindung betrifft ein Verfahren zum Speichern optisch lesbarer Information, insbesondere ein Verfahren zur Herstellung eines optisch lesbaren Datenspeichers, bei welchem die Oberfläche eines Substratmaterials strukturiert wird.

Zur Speicherung von Informationen in der elektronischen Datenverarbeitung als auch in der Unterhaltungselektronik werden bereits heute in großem Umfang optische Datenspeicher eingesetzt. Diese optischen Datenspeicher sind z.B. in Form von CD's (Compact Disc) bekannt. Bei der Herstellung von CD's wird nach bisherigem Stand der Technik ein durch aufwendige Methoden gefertigter Stempel benutzt, der im Verlaufe eines Spritzgußprozesses mechanisch in das Substratmaterial gepreßt wird und dadurch eine gewünschte Änderung der Oberflächenmorphologie bewirkt. Dadurch ergibt sich nach geeigneter Weiterbehandlung eine deutliche Änderung der optischen Reflexionseigenschaften, die durch einen Laserstrahl kleinen Durchmessers berührungslos abgetastet werden kann.

Durch die mechanische Erzeugung der Strukturinformation auf dem Substratmaterial - durch Pressen mit einem Stempel - ist eine Abnutzung des Stempels unvermeidbar. Die oftmals hohen Stückzahlen machen demzufolge einen mehrfachen Ersatz des Stempels erforderlich. Ein weiterer Nachteil des bisher bekannten mechanischen Verfahrens ist der, daß eine kurzfristige Änderung der durch den Stempel dargestellten aufgeprägten Strukturinformation nicht möglich ist.

Es ist zwar auch schon bekannt, Information auf einem optisch lesbaren Datenträger durch selektives Abtragen einer Speicherschicht mittels eines intensiven, fokussierten Laserstrahls zu speichern. Hierfür werden jedoch teuere Hochleistungslaser und hoch belastbare Optiken und/oder spezielle, relativ leicht verdampfbare Schichtmaterialien benötigt. Zudem ist - bedingt durch die geringe Schärfentiefe der optischen Abbildung bei der erforderlichen hohen Auflösung - ein solches Verfahren beschränkt auf **entweder** sequentielles Erzeugen der Informationsstruktur mit ständigem Nachfokussieren **oder** extrem ebene Substratoberflächen, wobei die erforderliche Ebenheit um mehr als eine Größenordnung über der heutzutage bei technischen Kunststoffoberflächen erzielbaren Ebenheit liegen müßte.

Aus einer Veröffentlichung von S. Küper und M. Stuke in Appl. Phys. A 49, 211-215 (1989) ist es schließlich bekannt, daß die UV-Absorption von Polymethylmethacrylat (PMMA) durch Bestrahlung mit UV-Licht örtlich selektiv erhöht werden kann und daß die Bereiche erhöhte Absorption durch anschließendes, örtlich nichtselektives Bestrahlen mit längerwelliger Strahlung durch Ablation selektiv entfernt werden kann. Bei dieser Veröffentlichung handelt es sich jedoch um eine wissenschaftliche Untersuchung zur Klärung des Ablationsmechanismus; auf eine praktische Anwendung wird jedoch nicht eingegangen. Außerdem wurde die für das hier vorgeschlagene Verfahren erforderliche hohe Ortsauflösung nicht demonstriert.

Der vorliegenden Erfindung liegt dementsprechend die Aufgabe zugrunde, ein Verfahren und eine Einrichtung zur Herstellung von optisch lesbaren Datenspeichern, z.B. von CD's, anzugeben, bei dem auf dem Einsatz eines mechanischen Stempels verzichtet werden kann.

Ein weiteres Ziel der Erfindung ist es, ein Verfahren zum Speichern von Information in einem optisch lesbaren Datenspeicher, insbesondere CD anzugeben, bei dem die zu speichernde Strukturinformation schnell und einfach geändert werden kann.

Diese Aufgabe wird gemäß der Erfindung durch ein Verfahren gelöst, bei denen Speicherung der Information, inbesondere die Herstellung von CD's, auf nicht-mechanischem Wege erfolgt, indem in einem ersten Verfahrensschritt eine erste, im $\mu$m- bzw. sub-$\mu$m-Bereich flächenmäßig selektive Belichtung von ausgewählten Bereichen des Substratmaterials mit Strahlung, die das optische Absorptionsvermögen des Substratmaterials erhöht, durchgeführt wird, und das Substrat in einem zweiten Verfahrensschritt flächenmäßig nicht selektiv mit Strahlung belichtet wird, die ein Abtragen von Substratmaterial nur in den ausgewählten Bereichen, die im ersten Verfahrensschritt vorbehandelt wurden, bewirkt.

Als Substrat-Material für CD's kommen vorzugsweise Kunststoffe oder Gläser, aber auch Kombinations-Werkstoffe in Frage. Als Kunststoffe können Thermoplaste und Duroplaste verwendet werden, insbesondere Polycarbonat (PC) und Polymethylmethacrylat (PMMA).

Bei dem vorliegenden Verfahren wird die Erzeugung einer gewünschten strukturierten Oberflächenmorphologie in zwei Schritten vorgenommen. In einem ersten Schritt werden die zu entfernenden Bereiche des Substrats durch örtlich exakt definierte Erhöhung der optischen Absorption für eine nachfolgende Abtragung durch Ablation mittels optischer Strahlung selektiv vorbereitet ("sensibilisiert"). In einem zweiten Schritt werden die Bereiche erhöhter optischer Absorption durch Ablation abgetragen, ohne daß die Ablations-Energie räumlich selektiv strukturiert eingestrahlt werden muß ("Ablation"). Der Ablationsprozeß erfolgt berührungslos - ohne mechanischen Druck - und kann an der Luft durchgeführt werden; der Sensibilisierungsprozeß kann ebenfalls berührungslos an Luft erfolgen, wobei es allerdings bei Herstellung großflächiger Strukturbereiche in **einem einzigen Schritt** (z.B. CD-Platten mit 118 mm Durchmesser) auf technischen Kunststoffoberflächen erforderlich sein wird, die zu strukturierende Oberfläche gegen eine geeignete Referenzebene, wie eine plane Glas- oder Quarzplatte, die als Belichtungsmaske ausgebildet sein kann, zu pressen.

Die Topographie der erzeugten Oberflächenstruktur kann an die Art der betreffenden Information (z.B. analoge oder digitale Videoinformation, CD-Audio-Information, Hologramme) und an die Auslesecharakteristik der entsprechenden Wiedergabegeräte angepaßt werden.

Bei einer bevorzugten Ausführungsform der Erfindung wird als Substrat- oder Basismaterial (Aufzeichnungsträger) Polymethylmethacrylat (PMMA) oder Polycarbonat (PC) verwendet, das zunächst mit kurzwelliger Strahlung ($\lambda \leq 248$ nm) bei vergleichsweise geringer Fluenz sensibilisiert wird. Die Ursache für die Sensibilisierung sind nach derzeitiger Erkenntnis photochemische Reaktionen, die zum Aufbrechen von chemischen Bindungen führen und damit eine Veränderung der optischen Eigenschaften (größerer Absorptionskoeffizient) in den bestrahlten Bereichen des Substratmaterials bewirken. Diese Sensibilisierungsphase kann zur Definition der gewünschten Struktur benutzt werden, indem nur die gewünschten Bereiche belichtet werden.

Für die örtlich selektive Sensibilisierung stehen vier verschiedene Verfahren zur Verfügung:

a) Im Strahlengang wird in unmittelbarer Nähe ("Proximity-Verfahren") des zu behandelnden Substrats eine Kontakt-Maske mit einer definierten Struktur angeordnet, so daß in einem Durchlichtverfahren die auf der Maske enthaltene Struktur in Form eines Schattenwurfs auf der Oberfläche des Substrat-Materials abgebildet wird.

b) Im Strahlengang wird eine Maske mit einer definierten Struktur angeordnet, die mit Hilfe einer optischen Abbildung mit einem durch die optische Abbildung vorgegebenen Maßstab auf die Oberfläche des Substrat-Materials projiziert wird.

c) Die Oberfläche des Substrat-Materials wird durch Belichtung mit einem fokussierten Strahl im Direktschreib-Verfahren ohne Verwendung einer Maske strukturiert.

d) Die Abbildung der zu erzeugenden Struktur geschieht durch ein holographisches Verfahren, wobei entweder ein Zwischenhologramm zur Abbildung verwendet wird, das analog zu einer Maske wirkt (wie unter b) beschrieben), oder die zu erzeugende Struktur stellt selbst das Hologramm eines vorgegebenen Objektes dar.

Diese vier Verfahren zur Strukturierung können natürlich beliebig miteinander kombiniert werden, woraus sich eine hohe Flexibilität des gesamten Herstellungsverfahrens ergibt.

Im folgenden werden Ausführungsbeispiele der Erfindung unter Bezugnahme auf die Zeichnungen näher erläutert. Es zeigen:

Figur 1 eine stark vereinfachte Darstellung einer Einrichtung zur Laserstrahl-Sensibilisierung gemäß einer Ausführungsform der Erfindung;

Figur 2 eine stark vereinfachte Darstellung einer Einrichtung zur Ablation gemäß einer Ausführungsform der Erfindung;

Figur 3 Transmissionsspektren von PMMA nach der Sensibilisierung mit Excimerlaserpulsen.

Figur 4 Transmissionsspektren von PMMA nach der Sensibilisierung mit CW-UV-Strahlung.

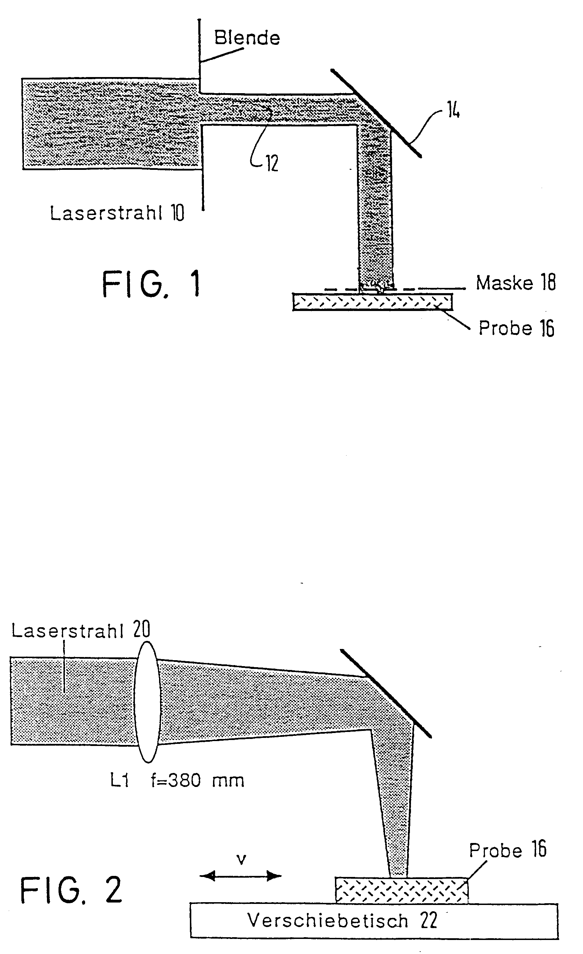

In Figur 1 ist zur Erläuterung des Prinzips der Sensibilisierung ein experimenteller Aufbau dargestellt. In der Praxis wird man normalerweise durch die Sensibilisierung eine großflächige Strukturdefinierung in einem Bestrahlungsschritt durchführen. Bei der in Figur 1 dargestellten Einrichtung wird aus einem Laserstrahl 10 ein Bündel 12 von z.B. 5 mm Durchmesser durch eine Blende ausgeblendet und durch einen Spiegel 14 auf eine Probe 16 (Aufzeichnungsträger) abgelenkt. Zur Strukturierung dient eine Maske 18, die in unmittelbarer Nähe der Probe angebracht ist und auf der Probe einen Schattenwurf erzeugt. Die abgeschatteten Bereiche der Probe werden nicht sensibilisiert.

Die Ablation der Proben erfolgt mit einem analogen Aufbau gemäß Figur 2. Zur Erhöhung der Fluenz wird die Strahlung eines Laserstrahls 20 mit einer Linse L1 so fokussiert, daß auf der Probe 16 ein Laserfleck von z.B. 2x5 mm vorliegt. Um den Laserstrahl möglichst homogen auf die Probe zu bringen, wird diese mit einem motorgetriebenen Verschiebe-Tisch 22 während der Bestrahlung kontinuierlich bewegt.

Um eine effektive Sensibilisierung der Probe durch eine Bestrahlung mit Licht (Laser, UV-Quelle) zu erreichen, soll die Wellenlänge der Strahlung in einer Absorptionsbande des Substratmaterials liegen. Die Sensibilisierung kann dann mit Laserstrahlung relativ niedriger Fluenz durchgeführt werden. Im Prinzip ist eine Energieeinkopplung auch über Zwei- und Mehrphotonenprozesse möglich, dazu ist jedoch eine höhere Fluenz der Sensibilisierungsstrahlung nötig.

Eine hohe Fluenz führt jedoch nach einer Sensibilisierung mit wenigen Pulsen bereits zur Ablation. Das Resultat ist dann eine immer weiter eindringende Ablationsfront, so daß eine definierte Tiefe der Strukturen nur bei sehr stabilen Pulsparametern erreicht wird.

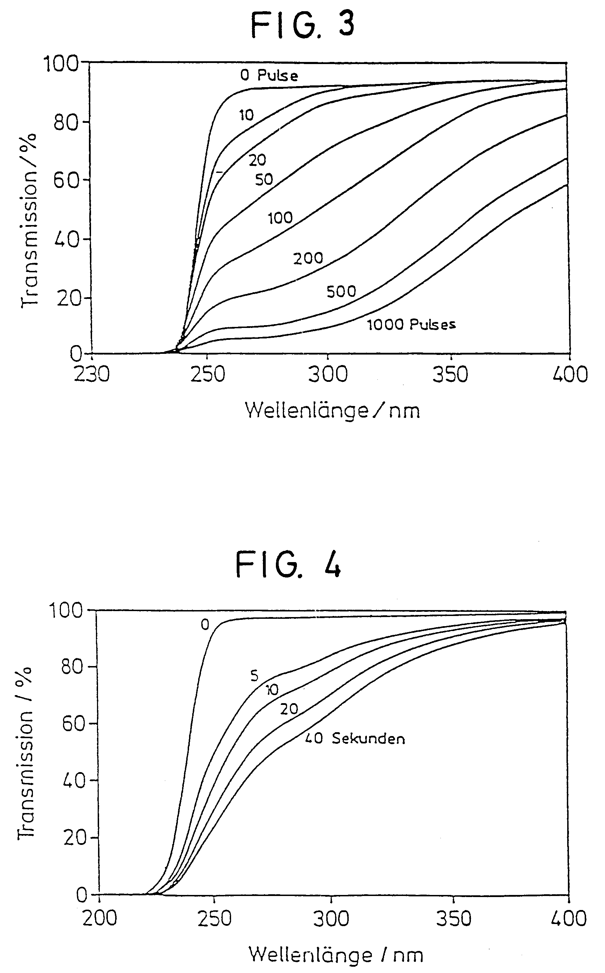

In Fig. 3 sind Transmissionsspektren von PMMA nach der Sensibilisierung durch Pulse eines Excimerlasers ($\lambda$ = 248 nm) dargestellt. Die Absorptionsänderung ist ersichtlich am größten in einem spektralen Bereich um 300 nm. Die Sensibilisierung hängt nicht von der eingestrahlten Intensität sondern nur von der eingestrahlten Energie bzw. der Zahl der eingebrachten Photonen ab. Dieser Sachverhalt ermöglicht die Sensibilisierung beispielsweise mit einer kontinuierlichen UV-Lichtquelle, wobei sich allerdings längere Bestrahlungszeiten ergeben.

In Figur 4 sind Transmissionsspektren von PMMA nach der Inkubation durch CW-UV-Strahlung bei $\lambda$ = 200-400 nm dargestellt. Die Proben werden gemäß Figur 3 mit 10 bis 1000 Pulsen bei Fluenzen im Bereich von 40 mJ/cm$^2$ inkubiert. Das entspricht gemäß Figur 4 einer Bestrahlungszeit von etwa 1 bis zu einigen 100 Sekunden einer schmalbandigen CW-UV-Lichtquelle mit 1 W optischer Leistung. Die Sensibilisierungsstrahlung darf allerdings auch nicht zu intensiv gewählt werden, um eine unkontrollierte Ablation zu vermeiden.

In Vorversuchen wurde mit Hilfe der Fourier-Infrarotspektroskopie gezeigt, daß bei der Inkubation von PMMA durch Pulse eines Excimerlasers Änderungen der chemischen Bindungsverhältnisse an der Oberfläche des PMMA induziert werden (Appl. Phys. A49, 211-245 (1989)).

In der zweiten Phase wird das bestrahlte Material durch Zufuhr von Laserenergie ablatiert. Die Wellenlänge des Ablationslasers muß so gewählt werden, daß das vorher nicht sensibilisierte Material keine Absorption, das sensibilisierte Material hingegen eine starke Absorption zeigt. Wie bereits erwähnt ist z.B. $\lambda$ = 308 nm eine günstige Wellenlänge für die Ablation von sensibilisiertem PMMA bzw. PC. Im Gegensatz zur Sensibilisierung ist die Ablation ein Schwellenprozeß, d.h. um das thermische und photochemische Abtragen des Materials zu erreichen muß eine ausreichende Intensität eingestrahlt werden. Durch die Sensibilisierung wird an den vorher bestrahlten Stellen die Eindringtiefe des Ablationslasers stark reduziert und damit die Ablationsschwelle deutlich verringert. Die Ablationsschwelle von unbehandeltem PMMA beträgt etwa 0,6 J/cm$^2$.

Die Ablation erfolgt vorzugsweise mit den ultrakurzen energiereichen Pulsen eines Excimerlasers, um die thermische Belastung des Materials möglichst gering zu halten. Eine Pulsdauer von 10 ns hat sich bewährt, man kann jedoch auch mit kürzeren Pulsen mit einer Dauer bis unter 1 ps, z. B. 500 fs arbeiten.

Versuche haben ergeben, daß bei der Ablation von PMMA im Falle der Verwendung von Laserstrahlungsimpulsen von 300 fs Dauer eines Excimerlasers ($\lambda$ = 248 nm) die für die Ablation benötige Fluenz um den Faktor 5 niedriger ist als wenn Pulse mit 16 ns Dauer verwendet werden (Appl. Phys. B44, 199-204 (1987), siehe auch DE-OS 38 09 211 A1).

Der Ablationsschritt erfolgt auf dem ganzen Substrat oder zumindest größeren Bereichen gleichzeitig, d.h. daß die im Vergleich zur Sensibilisierungsstrahlung intensivere und vorzugsweise auch langwelligere Ablationsstrahlung nicht örtlich selektiv eingestrahlt zu werden braucht.

Die Oberflächenbearbeitung mit einem die Verfahrensschritte Sensibilisierung und Ablation enthaltenden Zweischrittprozeß hat folgende Vorteile:

- Die Verwendung von kurzwelliger Sensibilisierungsstrahlung relativ geringer Intensität erlaubt sehr kleine Strukturbreiten. Es wurden erfolgreiche Versuche durchgeführt, die gezeigt haben, daß eine Änderung der Oberflächenmorphologie im sub-$\mu$m-Maßstab möglich ist.
- Das Strukturieren, d.h. örtlich selektive Sensibilisieren kann prinzipiell mit einer beliebigen Lichtquelle, die eine genügend kurzwellige Strahlung liefert, vorgenommen werden z.B. CW-Lampe, UV-Laser, Synchrotron etc.
- Der Ablationsschritt erfolgt mit energiereichen Excimerlaserpulsen auf dem ganzen Substrat oder in Bereichen, die groß im Vergleich zu den die Information darstellenden Strukturen sind, gleichzeitig, d.h. strahlungsfeste Masken und hoch belastbare Optiken werden nicht benötigt.

Ein weiterer Vorteil des erfindungsgemäßen Verfahrens ist die erwähnte Möglichkeit, bei der Erzeugung der Information auf dem Substrat eine Kombination von vorgefertigter (per Maske) mit aktueller Information (durch Direkt-Schreiben) zu wählen. Dadurch kann in Anlehnung an das CD-Format z.B. durch eine Maske mit vorgefertigter Aussparung (bei CD's ein Radius-Bereich von 7,5 - 22 mm) eine Zusatzinformation aufgebracht werden, z.B.

- Serien Nummer
- Kennzeichnung
- Codierung
- Sicherheits-Code,
- Kopierschutz, z. B. gegen DAT-Kopie
- aktuelle Daten für Verkehrsleitsystem.

Die erwähnten Ausführungsbeispiele sind selbstverständlich nicht auf CD's beschränkt. Weitere mögliche Produkte sind:

- Bild-Platten
- CD-Video
- CD-Interactive
- CD-Rom
- Optische Karte
- Optisch lesbares Band ("optical tape")
- Flexible, optisch lesbare Datenspeicher aus Folienmaterial
- Amplituden- und Phasenhologramme.

**Patentansprüche**

1. Verfahren zur Herstellung eines optisch lesbaren Datenspeichers, bei welchem die Oberfläche eines Substrat-Materials strukturiert wird, **dadurch gekennzeichnet**, daß in einem ersten Verfahrensschritt eine erste, im μm- bzw. sub-μm-Bereich flächenmäßig selektive Belichtung von ausgewählten Bereichen des Substratmaterials mit Strahlung, die das optische Absorptionsvermögen des Substratmaterials erhöht, durchgeführt wird, und daß das Substrat in einem zweiten Verfahrensschritt flächenmäßig nicht selektiv mit Strahlung belichtet wird, die ein Abtragen von Substratmaterial nur in den ausgewählten Bereichen, die im ersten Verfahrensschritt vorbehandelt wurden, bewirkt.

2. Verfahren nach Anspruch 1, **dadurch gekennzeichnet**, daß das Substrat-Material Polymethylmethacrylat (PMMA) oder Polycarbonat (PC) enthält; daß die erste, flächenmäßig selektive Belichtung im ersten Verfahrensschritt mit einer Strahlung im ultravioletten Spektralbereich erfolgt, wobei in die ausgewählten Bereiche die Energie der Strahlung so eingekoppelt wird, daß in diesen Bereichen photochemische Reaktionen ausgelöst werden, durch die die mikroskopische Struktur des Materials in diesen Bereichen derart verändert wird, daß der Absorptionskoeffizient für optische Strahlung im ultravioletten Spektralbereich in diesen Bereichen erhöht wird und daß die zweite, flächenmäßig nichtselektive Belichtung im zweiten Verfahrensschritt mit einer Strahlung im ultravioletten Spektralbereich erfolgt, wobei die Wellenlänge der Strahlung derart gewählt ist, daß das im ersten Verfahrensschritt unbelichtete Material keine wesentliche Absorption aufweist und das im ersten Verfahrensschritt belichtete Material eine so starke Absorption aufweist, daß das im ersten Verfahrensschritt belichtete Material durch Zufuhr von Strahlungsenergie ablatiert wird.

3. Verfahren nach Anspruch 1, **dadurch gekennzeichnet**, daß das Substrat-Material ein organisches Material ist.

4. Verfahren nach Anspruch 1 oder 2, **dadurch gekennzeichnet**, daß die erste Belichtung durch kohärente Strahlung erfolgt.

5. Verfahren nach Anspruch 1 oder 2, **dadurch gekennzeichnet**, daß die erste Belichtung mit inkohärenter Strahlung erfolgt.

6. Verfahren nach einem der Ansprüche 1 bis 5, **dadurch gekennzeichnet**, daß die zweite Belichtung mit inkohärenter Strahlung erfolgt.

7. Verfahren nach Anspruch 1 oder 2, **dadurch gekennzeichnet**, daß die erste und/oder die zweite Belichtung durch die Strahlung einer Laserstrahlungsquelle erfolgt.

8. Verfahren nach Anspruch 7, **dadurch gekennzeichnet**, daß für die zweite Belichtung Laserstrahlungsimpulse mit einer Dauer in der Größenordnung von 10 ns verwendet werden.

9. Verfahren nach Anspruch 8, **dadurch gekennzeichnet**, daß Laserstrahlungsimpulse mit einer Dauer unter 1 ns, insbesondere unter 500 fs verwendet werden.

10. Verfahren nach Anspruch 7, 8 oder 9, **dadurch gekennzeichnet**, daß die Laserstrahlquelle ein Excimerlaser ist.

11. Verfahren nach einem der vorhergehenden Ansprüche, **dadurch gekennzeichnet**, daß die Einkoppelung der Strahlungsenergie bei der ersten Belichtung dadurch erfolgt, daß mindestens ein spektraler Anteil der von der Lichtquelle emittierten Strahlung in einer Absorptionsbande des Substrat-Materials liegt.

12. Verfahren nach einem der vorhergehenden Ansprüche, **dadurch gekennzeichnet**, daß für die erste Belichtung eine Wellenlänge unter 250 nm verwendet wird.

13. Verfahren nach einem der vorhergehenden Ansprüche, **dadurch gekennzeichnet**, daß die ausgewählten Bereiche der Oberfläche des Substrat-Materials bei der ersten Belichtung belichtet werden, indem ein fokussierter Strahl im Direktschreib-Verfahren ein Muster auf der Oberfläche des Substrat-Materials erzeugt.

14. Verfahren nach einem der vorhergehenden Ansprüche, **dadurch gekennzeichnet**, daß für die zweite Belichtung eine Wellenlänge um 300 nm verwendet wird.

15. Verfahren nach einem der vorhergehenden Ansprüche, **dadurch gekennzeichnet**, daß in einem ersten Herstellungsschritt eine Maske mit einer lateralen Struktur, die eine vorgegebene Maskenfläche enthält, verwendet wird, und daß in einem zweiten Herstellungsschritt in dem durch die Maskenfläche unstrukturierten Bereich des Substrat-Materials im Direktschreib-Verfahren ein Muster erzeugt wird, welches eine Zusatzinformation enthält.

Blende

Laserstrahl 10

12

14

## FIG. 1

Maske 18

Probe 16

Laserstrahl 20

L1  f=380 mm

v

## FIG. 2

Probe 16

Verschiebetisch 22

# FIG. 3

Axes: Transmission / % (0–100) vs Wellenlänge / nm (230–400)

Curves labeled: 0 Pulse, 10, 20, 50, 100, 200, 500, 1000 Pulses

# FIG. 4

Axes: Transmission / % (0–100) vs Wellenlänge / nm (200–400)

Curves labeled: 0, 5, 10, 20, 40 Sekunden

Europäisches
Patentamt

**EUROPÄISCHER RECHERCHENBERICHT**

Nummer der Anmeldung

EP    92 10 9490
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | APPLIED PHYSICS  A SOLIDS AND SURFACES Bd. 49, 1989, Seiten 211 - 215 S KÜPER ET AL 'UV-excimer-laser ablation of polymethylmethacrylate at 248nm: characterisation of incubation sites with fourier transform ir- and uv-spectroscopy' * Seite 215 * --- | 1,2,7,8 | G11B7/00 G11B7/26 |
| A | IBM TECHNICAL DISCLOSURE BULLETIN Bd. 26, Nr. 6, November 1983, Seiten 3049 - 3050 SE BLUM ET AL 'archival storage with uv lasers' * das ganze Dokument * --- | 1-4,10 | |
| A | RESEARCH DISCLOSURE Nr. 258, 10. Oktober 1985, HAVANT GB Seite 60 'sensitization of laser etching of polymers - by incorporating organic dyes qith high extinction coefficient into polymers' * das ganze Dokument * --- | 1,2 | |
| A | RESEARCH DISCLOSURE Nr. 285, 10. Januar 1988, HAVANT GB Seite 69 'doped polyimide etching by laser ablation - increases ablation rate by adding neutral dye to polyimide film' * das ganze Dokument * --- | 1,2 | |
| A | PATENT ABSTRACTS OF JAPAN vol. 13, no. 127 (P-848)29. März 1989 & JP-A-63 298 341 ( MATSUSHITA ELECTRIC IND. CO. LTD. ) * Zusammenfassung * --- | 1,2 | |
| A | EP-A-0 402 797 (HOECHST AG.) * Spalte 1 - Spalte 4 * --- | 1-3,10 | |

| | RECHERCHIERTE SACHGEBIETE (Int. Cl.5) |
|---|---|
| | G11B |

Der vorliegende Recherchenbericht wurde für alle Patentansprüche erstellt

| Recherchenort | Abschlußdatum der Recherche | Prüfer |
|---|---|---|
| DEN HAAG | 17 SEPTEMBER 1992 | SZUBERT J.M. |

Europäisches
Patentamt

**EUROPÄISCHER RECHERCHENBERICHT**

Nummer der Anmeldung

EP    92 10 9490
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 090 145 (IBM) <br> --- | | |
| A | EP-A-0 327 508 (CIBA-GEIGY AG.) <br><br> ----- | | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| DEN HAAG | 17 SEPTEMBER 1992 | SZUBERT J.M. |